# EUROPEAN PATENT SPECIFICATION

(11) **EP 3 616 860 B1**
(45) Date of publication and mention of the grant of the patent: **07.12.2022**
(21) Application number: 19192801.9
(22) Date of filing: 21.08.2019
(51) Int. Cl.: B26B 15/00, A01G 3/037

(54) **SAFETY DEVICE FOR ELECTRIC CUTTING TOOL AND ELECTRIC CUTTING TOOL WITH THE SAFETY DEVICE**
SICHERHEITSVORRICHTUNG FÜR EIN ELEKTRISCHES SCHNEIDWERKZEUG UND ELEKTRISCHES SCHNEIDWERKZEUG MIT DER SICHERHEITSVORRICHTUNG
DISPOSITIF DE SÉCURITÉ POUR OUTIL DE COUPE ÉLECTRIQUE ET OUTIL DE COUPE ÉLECTRIQUE COMPORTANT LE DISPOSITIF DE SÉCURITÉ

(30) Priority: 31.08.2018 IT 201800008262; 18.10.2018 IT 201800009554
(43) Date of publication of application: 04.03.2020
(73) Proprietor: Zanon S.R.L., 35011 Campodarsego PD (IT)
(72) Inventor: ZANON, Franco, 35011 CAMPODARSEGO PD (IT)
(74) Representative: Modiano, Micaela Nadia

(56) References cited:
- EP-A1- 0 850 385
- EP-A1- 2 885 962
- WO-A1-2013/136311
- FR-A1- 2 712 837
- FR-A1- 2 846 729
- US-A- 4 996 742

## Description

The present invention relates to a safety device for a cutting tool.

The present invention also relates to an electric cutting tool with said safety device.

The invention is applicable in the field of gardening and farming, but it can also be used in other fields in which it is necessary to use electric cutting tools.

Portable cutting tools for gardening and farming, for pruning plants, provided with electrical start, operation and shutdown, are currently known and widespread.

Electric shears, for example, consist of a pair of scissors provided with a fixed blade and a movable blade.

The movable blade is electrically actuated and controlled.

These tools are generally integrated in a portable apparatus which also comprises an electric motor for the actuation of the tool and a battery for the power supply of the electric motor.

The battery is portable, for example in adapted backpacks, and is connected to the tool by means of electric power supply cables.

Cutting tools are currently known which are capable of controlling the movement of the movable blade and its actuation by virtue of adapted blade movement control means, such as for example an electronic board, a microcontroller, etc.

For correct operation of the tool, the battery must supply power and voltage according to the preset operating parameters.

The use of such tools by the operator can cause even considerable injury.

It may in fact happen that the operator maneuvers the tool with one hand and accidentally places part of the other hand between the blades of the tool, for example in the attempt to move a branch closer and facilitate its cutting.

In order to solve this problem, safety devices capable of stopping the movement of the blade have been developed. An example of prior art is given by the patent documentation EP2885962.

Italian patent no. 1421348, filed on 17 December 2013 in the name of the same Applicant, contains the teachings for providing a safety device that entails the use of a glove covered by a conducting shielding layer, which is connected by means of a conductor to the power supply cable of the electric cutting tool, which is battery-powered.

The operator handles the scissors with one hand and the branches and/or elements to be pruned with the other hand.

The hand that handles the branches wears the protective glove; the other hand is instead in direct contact with the handle of the scissors.

The shielding layer of the glove has the same potential as the shielding layer of the cable, while the metal of the blades is kept at a potential that is different from the potential of said cable.

The scissors are provided with means for detecting the potential and for movement control.

If the hand with the glove touches the movable blade, a circuit closes and the potential of the blades varies.

The detection means read this potential variation and determine a motor braking and power-off signal.

However, these known methods have some aspects that can be improved.

The glove for protecting the hand that handles the branch is kept at the same potential as the power supply cable of the scissors by means of a conductor that connects them.

This conductor is also an electrical cable, which can cause hindrance for the operator during work, leading to a handling of the branches and/or elements to be cut that is not always easy.

The aim of the present invention is to provide a safety device for an electric cutting tool and an electric cutting tool that are capable of improving the background art in one or more of the aspects indicated above.

Within this aim, an object of the invention is to provide a safety device for an electric cutting tool that does not constitute a hindrance to the work of the operator and is easy to use.

Another object of the invention is to provide a safety device for an electric cutting tool that allows to protect the hand of the operator from accidental cuts.

Another object of the present invention is to overcome the drawbacks of the background art in a manner that is alternative to any existing solutions.

Not least object of the invention is to provide a safety device for electric cutting tool that is highly reliable, relatively easy to provide and at competitive costs.

This aim, as well as these and other objects which will become better apparent hereinafter, are achieved by a safety device, which is not part of the claimed invention, for electric cutting tool, of the type comprising a cutting portion with a fixed blade and a movable blade, said tool having an element for the actuation of said movable blade and an electrically conducting handle, said movable blade being moved by motor means powered by a battery pack, said device being characterized in that it comprises:
- a microcontroller, connected to said battery pack,
- an optical coupler, connected at one end to said microcontroller and at the other end to said conducting handle and to said cutting portion,
- a glove provided with a conducting external layer,
- a conducting bracelet, which is connected to said glove through a battery.

Furthermore, the aim and objects described above and others which will become better apparent hereinafter are achieved by a safety device , which is part of the present invention, for electric cutting tool, of the type comprising a cutting portion with a fixed blade and a movable blade, said tool having an element for the actuation of said movable blade and an electrically conducting handle, said movable blade being moved by motor means powered by a battery pack, said device being characterized in that it comprises:
- a microcontroller, connected to said battery pack,
- an optical coupler, connected at one end to said microcontroller and at the other end to a voltage source and to said cutting portion,
- a conducting glove,
- said voltage source, connected with one pole to said optical coupler and with another pole, across a resistor, to said handle.

Further characteristics and advantages of the invention will become better apparent from the description of a preferred but not exclusive embodiment of the safety device for electrical cutting tool according to the invention, illustrated by way of nonlimiting example in the accompanying drawings, wherein:
Figure 1 is an operating diagram of a safety device for an electric cutting tool ;
Figure 2 is a view of a detail of the safety device for cutting tool according to Figure 1;
Figure 3 is a diagram of the operation of the cutting tool with a safety device according to the invention according to a first form of use;
Figure 4 is a diagram of the operation of the cutting tool with a safety device of Figure 3 in a second form of use;
Figure 5 is a sectional view of the power supply cable of the device of Figure 3.

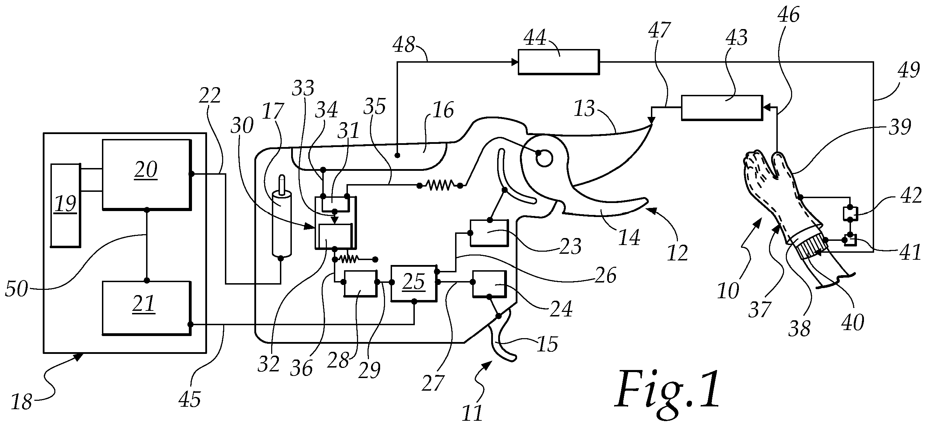

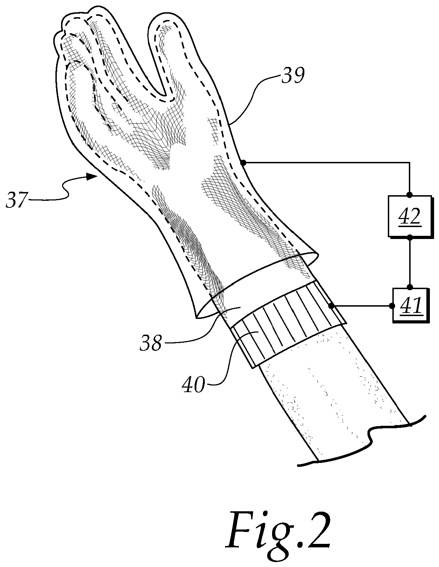

With reference to Figures 1 and 2, a safety device for electric cutting tool is designated generally by the reference numeral 10.

The cutting tool is designated by the reference numeral 11.

In the described example, the cutting tool 11 is a pair of scissors.

The tool 11 comprises a cutting portion 12 with a fixed blade 14 and a movable blade 13.

The tool 11 is provided with an element 15 for the actuation of the movable blade 13 and a handle 16.

In particular, the handle 16 is made of electrically conducting material, such as for example nylon filled with carbon fiber.

The movable blade 13 is moved by motor means 17 powered by a battery pack 18.

The battery pack 18 comprises a plurality of cells 19, for example lithium-ion cells, an inverter 20, which is connected thereto, and a microprocessor 21 for controlling the inverter 20.

The microprocessor 21 is connected to the inverter 20 via the electrical connection 50.

The actuation of the motor means 17 is adjusted by the inverter 20 by means of the connection 22.

The cutting tool 11 comprises means 23 for detecting the position of the movable blade 13 and means 24 for detecting the position of the actuation element 15 of the movable blade 13.

Such detection means 23, 24 are for example magnetic sensors.

The position detection means 23, 24 are connected to a microcontroller 25, respectively by means of the connections 26 and 27.

The microcontroller 25 is connected to a filter 28 by means of the connection 29.

In particular, the microcontroller 25 is connected to the control microprocessor 21 of the inverter 20 by means of a connection 45 of the CAN-bus (Controller Area Network bus) type.

The position detection means 23, 24 are adapted to provide information to the microprocessor 21, which on the basis of the information received supplies power to the inverter 20.

The tool 11 is provided with an optical coupler 30.

This optical coupler 30 comprises an emitter diode 31 and a photodarlington 32.

When the emitter diode 30 is crossed by current it emits light, which saturates the photodarlington 32 (connection 33).

In particular, the emitter diode 31 is connected to the cutting portion 12 by means of a first connection 35 and to the handle 16 by means of a second connection 34.

The photodarlington 32 is instead connected to the input of the filter 28 by means of a connection 36.

The output of the filter 28 is connected to the microcontroller 25 by means of the connection 29.

The safety device 10 comprises a glove 37.

In particular, the glove 37 comprises:
- an internal layer 38, in contact with the skin of the operator during use, made of insulating material, such as for example latex;
- an external layer 39, which is opposite the internal layer 38 and is made of electrically conducting material such as for example fabric with metallic threads.

One of the particularities of the device 10 is constituted by a conducting bracelet 40 which the user wears together with the glove 37.

The bracelet 40 can be an integral part of the glove 37.

In particular, the bracelet 40 is connected to the conducting external surface 39 of the glove 37 by means of a battery 41 and an electrical resistor 42, which are present inside the bracelet.

In a constructive variation, not shown in the figures, the battery 41 is inside the glove 37.

The battery 41 is for example a 9-12 V battery.

The resistor is, for example, a 10 kQ resistor.

Considering Figure 1, the reference numeral 43 designates the resistance that is generated between the glove 37 and the cutting portion 12.

The resistance of the body of the user is instead designated by the reference numeral 44.

The operation of the device 10 is shown schematically in Figure 1 and is as follows.

When the cutting portion 12 touches the glove 37, the circuit closes; the circuit is constituted by the following:
- positive pole of the battery 41,
- resistor 42,
- external layer 39 of the glove 37,
- resistance 43, following the direction of the arrow designated by the reference numeral 46,
- cutting portion 12 of the tool 11, following the direction of the arrow designated by the reference numeral 47,
- connection 35,
- emitter diode 31,
- connection 34,
- conducting handle 16,
- operator body, resistance 44, following the direction of the arrow designated by the reference numeral 48,
- bracelet 40, following the direction of the arrow designated by the reference numeral 49,
- negative pole of the battery 41.

The electric current that flows across the diode 31 saturates the photodarlington 32, generating a signal which is filtered by the filter 28 and read by the microcontroller 25.

In turn, the microcontroller 25 sends a signal, across the connection 45, to the microprocessor 21 of the battery pack 18, which blocks the motor 17, controlling the inverter 20.

The battery 41 is always open and its life corresponds to the self-discharge life.

It should be noted that the presence of the conducting bracelet 40 and of the battery 41 allows greater mobility to the operator with respect to devices of the known type, since there are no connecting cables between the glove and the tool and/or the battery pack which might hinder his work.

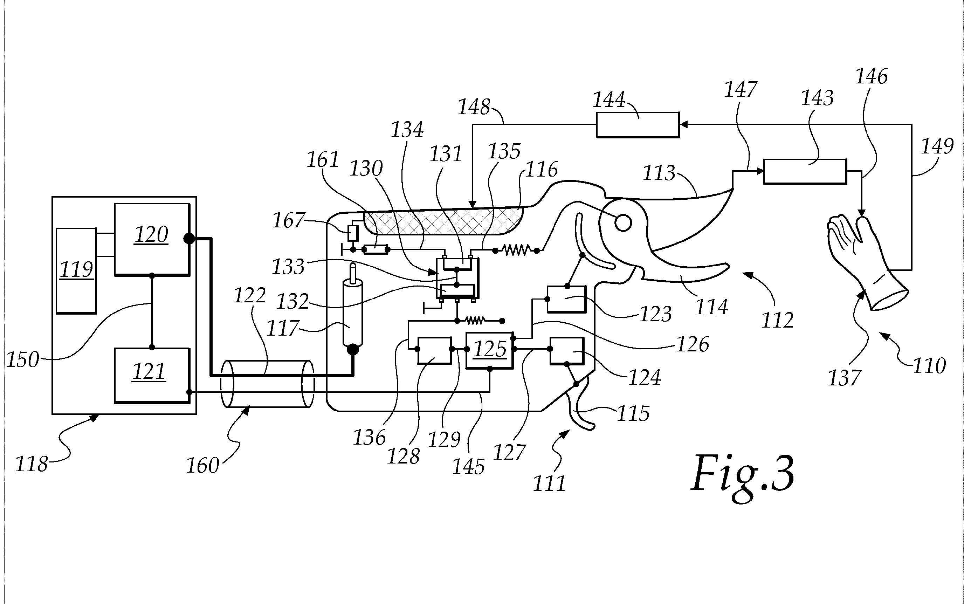

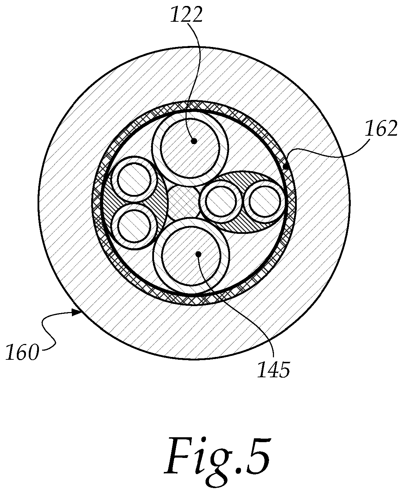

With reference to Figures 3 to 5, a safety device for electric cutting tool, according to the invention, is designated generally by the reference numeral 110.

The cutting tool is designated by the reference numeral 111.

In the described example, the cutting tool 111 is a pair of scissors.

The tool 111 comprises a cutting portion 112 with a fixed blade 114 and a movable blade 113.

The tool 111 is provided with an element 115 for the actuation of the movable blade 113 and a handle 116.

In particular, the handle 116 is made of electrically conducting material, such as for example nylon filled with carbon fiber.

The movable blade 113 is moved by motor means 117 powered by a battery pack 118.

The battery pack 118 comprises a plurality 119 of cells, for example lithium-ion cells, an inverter 120 connected thereto, and a microprocessor 121 for the control of the inverter 120.

The microprocessor 121 is connected to the inverter 120 by means of the electrical connection 150.

The actuation of the motor means 117 is adjusted by the inverter 120 by means of the connection 122.

The cutting tool 111 comprises means 123 for detecting the position of the movable blade 113 and means 124 for detecting the position of the actuation element 115 of the movable blade 113.

The detection means 123, 124 are for example magnetic sensors.

The position detection means 123, 124 are connected to a microcontroller 125, respectively by means of the connections 126 and 127.

The microcontroller 125 is connected to a filter 128 by means of the connection 129.

The filter 128 is a low-pass filter with a threshold comparator with hysteresis.

In particular, the microcontroller 125 is connected to the control microprocessor 121 of the inverter 120 by means of a connection 145 of the CAN-bus type.

The connection 145 between the microcontroller 125 and the microprocessor 121 and the connection 122 between the motor means 117 and the inverter 120 are enclosed within a same electrical cable 160 in the electrical path between the battery pack 118 and the tool 111.

The position detection means 123, 124 are adapted to provide information to the microprocessor 121, which supplies power to the inverter 120 on the basis of the received information.

The tool 111 is provided with an optical coupler 130.

The optical coupler 130 comprises an emitter diode 131 and a photodarlington 132.

When the emitter diode 131 is crossed by current, it emits light, which saturates the photodarlington 132 (connection 133).

In particular, the emitter diode 131 is connected to the cutting portion 112 by means of a first electrical connection 135.

The diode 131 is also connected to the positive pole of a voltage source 161 by means of a second electrical connection 134.

The voltage source 161 is, for example, a charge pump which draws voltage at 5 V from the power supply and raises it to 20 V.

The negative pole of the voltage source 161 is connected to the ground of the tool 111 and also, across a resistor 167, to the conducting handle 116.

The resistor 167 is connected to the microcontroller 125 by means of a connection which is not shown in the figures.

The voltage source 161 has a voltage of 15-20 V and is capable of delivering at most 200-300 µA of electric current.

The photodarlington 132 is instead connected to the input of the filter 128 by means of the connection 136.

The output of the filter 128 is connected to the microcontroller 125 by means of the connection 129.

One of the particularities of the invention resides in the presence of a shielding layer 162 in the electrical cable 160.

The shielding layer 162 wraps longitudinally around the set constituted by: the connection 145 between the microcontroller 125 and the microprocessor 121, and the connection 122 between the motor means 117 and the inverter 120.

The shielding layer 162 is constituted for example by a metallic sheath with two layers, one made of copper and one made of aluminum, and is connected to the ground of the tool 111.

Another particularity of the invention is the presence of a glove 137 adapted to be worn by the free hand of the operator.

The expression "free hand" in the present description is understood to refer to the hand of the operator that is not involved in holding the tool 111.

The glove 137 is entirely made of synthetic textile fiber mixed with steel and/or silver fiber so as to obtain adequate mechanical strength and breathability and a low electrical resistance on the glove.

The electrical resistance on the glove is less than 1000 Ω.

The glove 137 is close-fitting and also covers the wrist of the operator. In this manner a low electrical resistance is generated between the external surface of the glove 137, which can be touched accidentally by the cutting portion 112 of the tool 111, and the body of the operator.

Figure 3 shows a first form of application of the device 110 according to the invention.

The reference numeral 143 designates the resistance generated between the glove 137 and the cutting portion 112.

The reference numeral 144 instead designates the resistance of the body of the operator.

The operation of the device 110 according to the invention in this first form of application is as follows.

When the cutting portion 112 touches the glove 137, the circuit closes; the circuit is constituted by the following:
- positive pole of the voltage source 161,
- emitter diode 131,
- connection 135,
- cutting portion 112 of the tool 111,
- resistance 143, following the direction of the arrow designated by the reference numeral 147,
- conducting glove 137, following the direction of the arrow designated by the reference numeral 146,
- operator body, resistance 144, following the direction of the arrow designated by the reference numeral 149,
- conducting handle, following the direction of the arrow designated by the reference numeral 148,
- resistor 167,
- negative pole of the voltage source 161.

The electric current that flows across the diode 131 saturates the photodarlington 132, generating a signal that is filtered by the filter 128 and read by the microcontroller 125.

The microcontroller 125 also reads the voltage across the resistor 167 and decides the halting of the motor 117 on the basis of all this information.

The microcontroller 125 then sends a signal, via the connection 145, to the microprocessor 121 of the battery pack 118, which blocks the motor 117, by controlling the inverter 120.

It should be noted that the conducting glove 137 makes the contact resistance between the cutting portion 112 and the club 137 uniform over the entire surface of the glove 137.

In order to check that the user has put on the glove and that the resistance 144 is low enough to be able to detect contact between the cutting portion 112 and the glove 137, before beginning to use the tool 111, an activation step is necessary.

The tool 111, immediately after power on, is in the halted state. The activation step begins by pressing fully, for 2-3 seconds, the element 115 for the actuation of the movable blade 113 and simultaneously touching the cutting portion 112 with the conducting glove 137.

The microcontroller 125 detects contact between the cutting portion 112 and the glove 137, with the output signal from the filter 128, and measures the current that flows across the circuit that closes, by measuring the voltage across the resistor 167. In this manner it obtains the risk resistance 144 of the body of the operator.

If the resistance 144 is lower than a preset value, on the order of one MΩ, the tool 111 passes to the active state and the movable blade 113 can move.

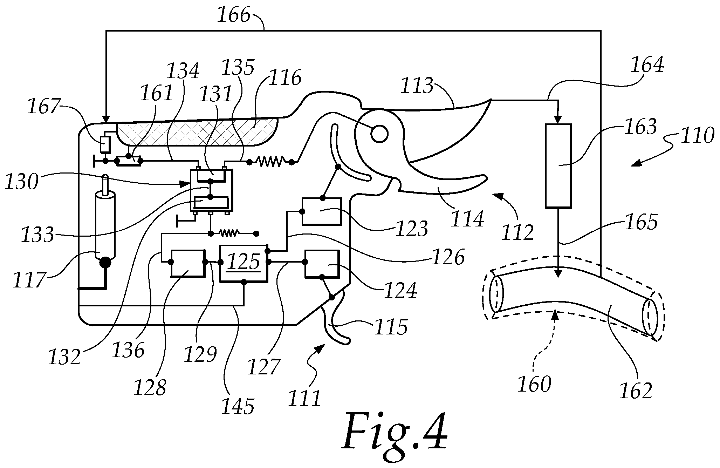

Figure 4 shows a second form of application of the device 110 according to the invention.

The reference numeral 163 designates the electrical resistance that is generated between the cutting portion 112 and the shielding layer 162 of the cable 160.

When the cutting portion 112 touches the cable 160, and in particular its shielding layer 162, the circuit closes; the circuit is constituted by the following:
- positive pole of the voltage source 161,
- emitter diode 131,
- connection 135,
- cutting portion 112 of the tool 111,
- resistance 163, following the direction of the arrow designated by the reference numeral 164,
- shielding layer 162 of the cable 160, in the direction indicated by the arrow 165,
- negative pole of the voltage source 161, across the ground of the tool 111 in the direction indicated by the arrow 166.

Both the shielding layer 162 of the cable 160 and the negative pole of the voltage source 161 are in fact connected to the ground of the tool 111.

The electric current that flows across the diode 131 saturates the photodarlington 132, generating a signal which is filtered by the filter 128 and read by the microcontroller 125.

The microcontroller 125 also reads the voltage across the resistor 167 and decides the halting of the motor 117 on the basis of all this information.

The microcontroller 125 then sends a signal, via the connection 145, to the microprocessor 121 of the battery pack 118 which halts the motor 117 by controlling the inverter 120.

In a constructive variation, not shown in the figures, instead of the optical coupler 30, 130 it is possible to insert a portion which comprises:
- a shunt resistor, for example a 20,000 Ω resistor, instead of the photodiode 31, 131,
- an integrated element of the so-called high side current shunt monitor type, such as the one known by the trade name INA138 of the company Texas Instruments, instead of the photodarlington 32, 132.

In this case, the signal in output from the integrated element is a voltage that is proportional to the current that flows across the shunt resistor.

With this integrated element it is possible to obtain a more precise measurement of the current and it is also possible to set a current threshold for blocking the cutting portion that is customized on the individual operator on the basis of the resistance measured on the latter during activation.

It should be noted that by means of the invention a safety device for electric cutting tool has been devised which allows greater mobility to the operator with respect to devices of the known type, since there are no connecting cables between the glove and the tool and/or the battery pack that might hinder his work.

In practice it has been found that the invention achieves the intended aim and objects, providing a safety device for electric cutting tool and an electric cutting tool that allow to protect the hand of the operator against accidental cuts, at the same time ensuring adequate mobility thereto.

The invention thus conceived is susceptible of numerous modifications and variations, all of which are within the scope of the appended claims; all the details may furthermore be replaced with other technically equivalent elements.

In practice, the materials used, so long as they are compatible with the specific use, as well as the contingent shapes and dimensions, may be any according to the requirements and the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. . A safety device (110) for an electric cutting tool (111), of the type comprising a cutting portion (112) with a fixed blade (114) and a movable blade (113), said tool (111) having an element (115) for the actuation of said movable blade (113) and an electrically conducting handle (116), said movable blade (113) being moved by motor means (117) powered by a battery pack (118), **characterized in that** it comprises:
- a microcontroller (125), connected to said battery pack (118),
- an optical coupler (130), which is connected at one end to said microcontroller (125) and at the other end to a voltage source (161) and to said cutting portion (112),
- a conducting glove (137),
said voltage source (161) being connected with one pole to said optical coupler (130) and with another pole, across a resistor (167), to said handle (116).

2. . The device (110) according to claim 1, **characterized in that** said optical coupler (130) comprises an emitter diode (131) which is connected to said voltage source (161) and to said cutting portion (112), and a photodarlington (132) connected to said microcontroller (125).

3. . The device (110) according to claim 1 or 2, **characterized in that** it comprises a filter (128) between said photodarlington (132) and said microcontroller (125).

4. . The device (110) according to one or more of the preceding claims, **characterized in that** said battery pack (118) comprises: a plurality (119) of cells, an inverter (120), which is connected thereto, and a microprocessor (121) for controlling the inverter (120), which is connected thereto.

5. . The device (110) according to one or more of the preceding claims, **characterized in that** said microcontroller (125) is connected to said microprocessor (121) for the control of said inverter (120), by means of a connection (145) of the CAN-bus type.

6. . The device (110) according to one or more of the preceding claims, **characterized in that** said cutting tool (111) comprises means (123) for detecting the position of said movable blade (114) and means (124) for detecting the position of said actuation element (115) of said movable blade (114).

7. . The device (110) according to one or more of the preceding claims, **characterized in that** said glove (137) is made of textile fiber mixed with steel and/or silver fibers.

8. . An electric cutting tool (111), **characterized in that** it comprises a safety device (110) according to one or more of the preceding claims.

## Patentansprüche

1. Eine Sicherheitsvorrichtung (110) für ein elektrisches Schneidwerkzeug (111), von der Art, die einen Schneideabschnitt (112) mit einem festen Messer (114) und einem beweglichen Messer (113) umfasst, wobei das Werkzeug (111) ein Element (115) für den Antrieb des beweglichen Messers (113) und einen elektrisch leitenden Griff (116) hat, wobei das bewegliche Messer (113) von Motormitteln (117) bewegt wird, die von einem Batterieblock (118) angetrieben werden; **dadurch gekennzeichnet, dass** sie Folgendes umfasst:
- einen Mikrocontroller (125), der mit dem Batterieblock (118) verbunden ist,
- einen Optokoppler (130), der an einem Ende mit dem Mikrocontroller (125) und am anderen Ende mit einer Spannungsquelle (161) und mit dem Schneideabschnitt (112) verbunden ist,
- einen leitenden Handschuh (137),
- wobei die Spannungsquelle (161) an einem Pol mit dem Optokoppler (130) und an einem anderen Pol, über einen Widerstand (167), mit dem Griff (116) verbunden ist.

2. Die Vorrichtung (110) gemäß Anspruch 1, **dadurch gekennzeichnet, dass** der Optokoppler (130) eine Emitterdiode (131) umfasst, die mit der Spannungsquelle (161) und mit dem Schneideabschnitt (112) verbunden ist, und einen Photo-Darlington-Transistor (132), der mit dem Mikrocontroller (125) verbunden ist.

3. Die Vorrichtung (110) gemäß Anspruch 1 oder 2, **dadurch gekennzeichnet, dass** sie einen Filter (128) zwischen dem Photo-Darlington-Transistor (132) und dem Mikrocontroller (125) umfasst.

4. Die Vorrichtung (110) gemäß einem oder mehreren der obigen Ansprüche, **dadurch gekennzeichnet, dass** der Batterieblock (118) Folgendes umfasst: eine Vielzahl (119) von Zellen, einen damit verbundenen Wechselrichter (120) und einen Mikroprozessor (121) zum Steuern des damit verbundenen Wechselrichters (120).

5. Die Vorrichtung (110) gemäß einem oder mehreren der obigen Ansprüche, **dadurch gekennzeichnet, dass** der Mikrocontroller (125) zur Steuerung des Wechselrichters (120) über eine Verbindung (145) vom CAN-Bus-Typ mit dem Mikroprozessor (121) verbunden ist.

6. Die Vorrichtung (110) gemäß einem oder mehreren der obigen Ansprüche, **dadurch gekennzeichnet, dass** das Schneidewerkzeug (111) Mittel (123) zum Erfassen der Position des beweglichen Messers (114) und Mittel (124) zum Erfassen der Position des Antriebselements (115) des beweglichen Messers (114) umfasst.

7. Die Vorrichtung (110) gemäß einem oder mehreren der obigen Ansprüche, **dadurch gekennzeichnet, dass** der Handschuh (137) aus Textilfaser, gemischt mit Stahl- und/oder Silberfasern, hergestellt ist.

8. Ein elektrisches Schneidwerkzeug (111), **dadurch gekennzeichnet, dass** es eine Sicherheitsvorrichtung (110) gemäß einem oder mehreren der obigen Ansprüche umfasst.

## Revendications

1. Dispositif de sécurité (110) pour un outil de coupe électrique (111), du type comportant une partie de coupe (112) avec une lame fixe (114) et une lame mobile (113), ledit outil (111) ayant un élément (115) pour l'actionnement de ladite lame mobile (113) et une poignée électriquement conductrice (116), ladite lame mobile (113) étant déplacée par des moyens moteurs (117) alimentés par un bloc-batterie (118), **caractérisé en ce qu'**il comporte :
- un microcontrôleur (125), connecté audit bloc-batterie (118),
- un coupleur optique (130), qui est connecté, au niveau d'une extrémité, audit microcontrôleur (125) et, au niveau de l'autre extrémité, à une source de tension (161) et à ladite partie de coupe (112),
- un gant conducteur (137),
ladite source de tension (161) étant connectée avec un pôle audit coupleur optique (130) et avec un autre pôle, à travers une résistance (167), à ladite poignée (116).

2. Dispositif (110) selon la revendication 1, **caractérisé en ce que** ledit coupleur optique (130) comporte une diode émettrice (131) qui est connectée à ladite source de tension (161) et à ladite partie de coupe (112), et un phototransistor Darlington (132) connecté audit microcontrôleur (125).

3. Dispositif (110) selon la revendication 1 ou 2, **caractérisé en ce qu'**il comporte un filtre (128) entre ledit phototransistor Darlington (132) et ledit microcontrôleur (125).

4. Dispositif (110) selon une ou plusieurs des revendications précédentes, **caractérisé en ce que** ledit bloc-batterie (118) comporte : une pluralité (119) de cellules, un onduleur (120), qui est connecté à celles-ci, et un microprocesseur (121) pour commander l'onduleur (120), qui est connecté à celui-ci.

5. Dispositif (110) selon une ou plusieurs des revendications précédentes, **caractérisé en ce que** ledit microcontrôleur (125) est connecté audit microprocesseur (121) pour la commande dudit onduleur (120), au moyen d'une connexion (145) du type bus CAN.

6. Dispositif (110) selon une ou plusieurs des revendications précédentes, **caractérisé en ce que** ledit outil de coupe (111) comporte des moyens (123) pour détecter la position de ladite lame mobile (114) et des moyens (124) pour détecter la position dudit élément d'actionnement (115) de ladite lame mobile (114).

7. Dispositif (110) selon une ou plusieurs des revendications précédentes, **caractérisé en ce que** ledit gant (137) est constitué de fibres textiles mélangées avec des fibres d'acier et/ou d'argent.

8. Outil de coupe électrique (111), **caractérisé en ce qu'**il comporte un dispositif de sécurité (110) selon une ou plusieurs des revendications précédentes.
